# EUROPÄISCHE PATENTANMELDUNG

(11) **EP 3 534 293 A1**
(43) Veröffentlichungstag der Anmeldung: **04.09.2019**
(21) Anmeldenummer: 18159237.9
(22) Anmeldetag: 28.02.2018
(51) Int. Cl.: G06K 9/00, G06K 9/32

(54) **VERFAHREN UND VORRICHTUNG ZUR ERMITTLUNG DER POSITION VON OBJEKTEN**

(71) Anmelder: Plapp, Johannes, 81249 München (DE)
(72) Erfinder: Plapp, Johannes, 81249 München (DE)
(74) Vertreter: Schaich, Axel

(57) **Zusammenfassung**

Eine Vorrichtung zur Ermittlung der Position von Objekten in einem definierten Bereich beinhaltet zumindest eine optische Erfassungsvorrichtung, die an einer baulichen Struktur fest montiert und dazu angeordnet ist, zumindest eine visuelle Markierung an einem zu lokalisierenden Objekt zu erfassen. Die die zumindest eine optische Erfassungsvorrichtung weist zumindest eine Kameravorrichtung und zumindest eine mit der Kameravorrichtung über eine schnelle drahtgebundene Verbindung direkt gekoppelte Rechen- und Kommunikationseinheit auf. Die die Kameravorrichtung ist dazu angeordnet, zumindest ein Bild des definierten Bereichs aufzunehmen. Die optische Erfassungsvorrichtung ist dazu angeordnet, Daten des aufgenommenen Bilds mit einer ersten Datenmenge über die schnelle drahtgebundene Verbindung an die Rechen- und Kommunikationseinheit zu übertragen. Die Rechen- und Kommunikationseinheit ist dazu angeordnet, die Daten des aufgenommenen Bilds zunächst direkt zu verarbeiten und verarbeitete Daten mit einer zweiten Datenmenge, die kleiner ist als die erste Datenmenge, an eine externe Servervorrichtung zu übertragen. Ein Verfahren zur Ermittlung der Position von Objekten in einem definierten Bereich führt korrespondierende Verfahrensschritte aus.

## Beschreibung

Die Erfindung betrifft ein Verfahren und Vorrichtung zur Ermittlung der Position von Objekten in einem definierten Bereich, und bezieht sich insbesondere auf ein Verfahren und eine Vorrichtung zur dreidimensionalen Echtzeitlokalisierung von Objekten in einem definierten Bereich mittels fest montierter, optischer Erfassungsvorrichtungen und zumindest einer visuellen Markierung an einem zu lokalisierenden Objekt.

### Stand der Technik

Die Lokalisierung von beweglichen Objekten, wie beispielsweise Fahrzeugen, Paketen, Paletten oder auch Personen in Echtzeit ist in der Logistik eine zentrale Fragestellung. Insbesondere für Fahrzeuge ist dies nützlich, um Fahrwege nachverfolgen und optimieren zu können, oder um diese autonom zu steuern. Auch die Lokalisierung anderer Arten von Objekten ist ein wichtiger Faktor in der modernen Logistik, da dadurch beispielsweise das Ein- und Auslagern von Objekten vollautomatisch verbucht werden kann.

Für beispielsweise Fahrzeuge als einer Art der beweglichen Objekte werden derzeit häufig on-board Sensoren, wie beispielsweise Kameras, Radar und Laser-Scanner (LIDAR), verwendet. Allen Sensoren auf dem Fahrzeug ist jedoch ein Problem dahingehend gemeinsam, dass sie erhöhter Abnutzung ausgesetzt sind und dadurch entsprechend aufwendig konstruiert sein müssen.

Um dieses Problem zu umgehen, wurden Systeme vorgeschlagen, bei welchen Hauptkomponenten nicht am Objekt, sondern fest im Gebäude verbaut sind. Ein Beispiel sind funkwellen-basierte Systeme, bei welchen jedoch sämtlich Interferenz-Problemen mit Stahl und Wasser auftreten, und kamera-basierte Systeme.

Beispielsweise ist zur Echtzeitlokalisierung von Objekten in einem definierten Bereich mittels fest montierter, optischer Erfassungsvorrichtungen und zumindest einer visuellen Markierung an einem zu lokalisierenden Objekt ein auf Markern basierendes lokales Ortungssystem bekannt, das eine echtzeitnahe Ortung von Objekten auf einem Betriebsgelände erlaubt. Hierbei werden zur Bestimmung der Ortungskoordinaten beweglicher Objekte an beispielsweise einer Decke einer Halle in vorbestimmten Lagen angeordnete Videokameras eingesetzt. Eine Identifikation und Ortung der beweglichen Objekte kann sodann über an Oberflächen der beweglichen Objekte sichtbar angebrachte Codetafeln, die automatisch aus Kamerabildern über Bildanalysealgorithmen erkannt werden können, erfolgen. Über die bekannte Lage der Kamera kann die Position und die Ausrichtung der Codetafeln berechnet werden. Durch die Ortung und die ermittelte Ausrichtung der beweglichen Objekte kann damit die Position beispielsweise aufgenommener oder eingelagerter Ware bestimmt werden. Die bekannte Anordnung integriert hierbei vorhandene Infrastrukturen und greift auf bereits bestehende Infrastrukturen der WLAN-Kommunikation und Videoüberwachung zurück, um Ergebnisse der Ortung an vorbestimmte Schnittstellen weiterzugeben.

Ein solches kamera-basiertes System weist jedoch aufgrund der Konzeption mit Netzwerkkameras bzw. vernetzten Kameras einige Schwachstellen auf. Beispielsweise führt ein Streamen von Bilddaten zwangsläufig zu einer hohen Latenzzeit (ca. 2s), und ist darüber hinaus nicht auf größere Bereiche skalierbar. Einige der bislang vorgeschlagenen Systeme sind auch auf flach angebrachte Marker limitiert und benötigen die Position des Objektes in der z-Achse (Höhe) zur Berechnung der x-y Position.

Außerdem ist es einigen Systemen nicht möglich, die Ausrichtung des Objektes in allen drei Achsen zu bestimmen.

### Kurzbeschreibung der Erfindung

Der Erfindung liegt daher als eine Aufgabe zugrunde, ein Verfahren und eine Vorrichtung zur dreidimensionalen Echtzeitlokalisierung von Objekten in einem definierten Bereich zu schaffen, welche die vorgenannten Nachteile überwinden, zumindest die Latenzzeit bei der Übertragung von Bilddaten verringern, weitere Eigenschaften über die Objekte erkennen und auf größere Bereiche skalierbar sind.

Erfindungsgemäß wird diese Aufgabe durch eine Vorrichtung zur Ermittlung der Position von Objekten in einem definierten Bereich mit den Merkmalen des Anspruchs 1 und durch ein Verfahren zur Ermittlung der Position von Objekten in einem definierten Bereich mit den Merkmalen des Anspruchs 12 gelöst. Vorteilhafte Weiterbildungen der Erfindung sind Gegenstand der beigefügten Unteransprüche.

Der Erfindung liegt die allgemeine Idee zugrunde, ein Verfahren und eine Vorrichtung zur Echtzeitlokalisierung von Objekten in einem definierten Bereich mittels einer Vielzahl von feststehend montierten, optischen Erfassungsvorrichtungen mithilfe einer visuellen Markierung am zu lokalisierenden Objekt durchzuführen. Jede Erfassungsvorrichtung (EV) besteht aus zumindest einer hochauflösenden, digitalen Kamera und zumindest einer schnell und direkt an diese angekoppelte Rechen- und Kommunikationseinheit (REK). Beispielsweise können eine Kamera und eine Rechen- und Kommunikationseinheit in einem gemeinsamen Gehäuse aufgenommen und als solches die Erfassungsvorrichtung an einer vorhandenen, festen Struktur in dem definierten Bereich (z. B. an einer Deckenkonstruktion oder an Säulen) angebracht werden.

Jede Erfassungsvorrichtung erfasst alle visuellen Markierungen in dem für sie sichtbaren Bereich, berechnet mittels der Rechen- und Kommunikationseinheit deren absolute Positionen und sendet diese über ein vorbestimmtes Netzwerk. Aufgrund der schnellen und direkten Ankopplung der Rechen- und Kommunikationseinheit an die Kamera in der Erfassungsvorrichtung kann von der Kamera erfasste Information in der Rechen- und Kommunikationseinheit schnell vorverarbeitet werden, und sind als Ausgabe der Rechen- und Kommunikationseinheit entsprechend wesentlich geringere Datenmengen an nachgeschaltete Systemkomponenten zu übertragen.

Ein das Verfahren und die Vorrichtung ausgestaltendes System ist dadurch auf große Flächen mit hunderten von Kameras skalierbar und dazu ausgelegt, Latenzzeiten von weniger als 0,1 Sekunden zu erreichen und die Position und Orientierung von Objekten in allen drei Dimensionen bestimmen zu können. Zudem kann das System dazu verwendet werden, zusätzliche Informationen über das lokalisierte Objekt (z. B. den Beladungszustand) zu erfassen.

Im Einzelnen wird die Aufgabe gelöst durch eine Vorrichtung zur Ermittlung der Position von Objekten in einem definierten Bereich, mit zumindest einer optischen Erfassungsvorrichtung, die an einer baulichen Struktur fest montiert und dazu angeordnet ist, zumindest eine visuelle Markierung an einem zu lokalisierenden Objekt zu erfassen, wobei die zumindest eine optische Erfassungsvorrichtung zumindest eine Kameravorrichtung und zumindest eine mit der Kameravorrichtung über eine schnelle drahtgebundene Verbindung direkt gekoppelte Rechen- und Kommunikationseinheit aufweist; und die Kameravorrichtung dazu angeordnet ist, zumindest ein Bild des definierten Bereichs aufzunehmen, die optische Erfassungsvorrichtung dazu angeordnet ist, Daten des aufgenommenen Bilds mit einer ersten Datenmenge über die schnelle drahtgebundene Verbindung an die Rechen- und Kommunikationseinheit zu übertragen, und die Rechen- und Kommunikationseinheit dazu angeordnet ist, die Daten des aufgenommenen Bilds zunächst direkt zu verarbeiten und verarbeitete Daten mit einer zweiten Datenmenge, die kleiner ist als die erste Datenmenge, an eine externe Servervorrichtung zu übertragen.

Bevorzugt ist die Erfassungsvorrichtung dazu angeordnet, mittels der Kameravorrichtung eine Mehrzahl von visuellen Markierungen in einem für sie sichtbaren Bereich zu erfassen und mittels der Rechen- und Kommunikationseinheit deren absolute Positionen zu berechnen. Vorteil einer Berechnung nahe an der Kamera ist, dass auf die aufwändige Übertragung von Bilddaten über ein Netzwerk verzichtet werden kann.

Bevorzugt ist die dazu angeordnet, für die Ermittlung der Position von Objekten in Echtzeit Latenzzeiten von weniger als 0,1 Sekunden aufzuweisen, und sowohl die Position als auch eine Orientierung von Objekten in drei Dimensionen zu bestimmen. Diese geringe Latenzzeit erweitert den Nutzungsbereich der Erfassung ganz erheblich, z.B. für autonome Fahrzeuge und Echtzeit-Kontrolle von Packvorgängen. Durch die Erfassung der Position und Orientierung in drei Dimensionen können wertvolle Informationen erfasst werden, beispielsweise, in welcher Höhe sich ein Gegenstand gerade befindet, womit dann auf dessen aktuelles Fach in einem Regal geschlossen werden kann. Durch die Erfassung der Orientierung in drei Dimensionen können Marker in allen Lagen, also nicht nur parallel zum Boden angebracht werden. Das ist z.B. bei Fahrzeugen hilfreich - hier können Marker seitlich angebracht werden.

Bevorzugt weist die Rechen- und Kommunikationseinheit zumindest einen Grafikprozessor und/oder zumindest eine Mehrkern-CPU zur parallelisierten Echtzeitverarbeitung auf mehreren Prozessoren auf. Durch eine Parallelisierung wird eine höhere Energieeffizienz, eine schnellere Bearbeitung und damit eine geringere Latenzzeit erreicht.

Bevorzugt ist zur Erfassung der visuellen Markierungen in der Kameravorrichtung ein optischer Sensor angeordnet, wobei der optische Sensor ein mit wenigstens 1 Megapixel auflösender, digitaler Farbsensor oder ein monochromer Sensor ist. Durch eine hohe Auflösung können größere Flächen überwacht und/oder eine höhere Genauigkeit erzielt werden.

Bevorzugt ist die Rechen- und Kommunikationseinheit dazu angeordnet, Kalibrierungsdaten zu empfangen, Positionen visueller Markierungen in dem aufgenommenen Bild zu berechnen und die berechneten Positionen in absolute Koordinaten der visuellen Markierungen umzurechnen. Vorteil einer Berechnung nahe an der Kamera ist, dass auf die aufwändige Übertragung von Bilddaten über ein Netzwerk verzichtet werden kann.

Bevorzugt ist die Rechen- und Kommunikationseinheit dazu angeordnet, das Bild des Sensors zu empfangen, das Bild in eine passende Auflösung zu skalieren, ein 2D-Bild mit Helligkeitswerten zu erzeugen und das erzeugte 2D-Bild an zumindest einen Prozess auf zumindest einer CPU zu übertragen und in einen gemeinsamen Speicherbereich der Rechen- und Kommunikationseinheit zu verschieben.

Bevorzugt ist die Rechen- und Kommunikationseinheit dazu angeordnet, das in den gemeinsamen Speicherbereich verschobene 2D-Bild in eine Mehrzahl von N Teilausschnitten (N ≥ 2) aufzuteilen, jedem Teilausschnitt einen dedizierten Prozess zuzuweisen und die Teilausschnitte mittels der zugewiesenen Prozesse parallel zu bearbeiten. Vorteil einer solchen Parallelisierung sind unter anderem eine höhere Energieeffizienz, eine schnellere Bearbeitung und damit eine geringere Latenzzeit.

Bevorzugt ist die Rechen- und Kommunikationseinheit dazu angeordnet, von den zugewiesenen Prozessen erhaltene Ergebnisse mittels eines Kollektorprozesses zu sammeln, eine Deduplikation mehrfach erfasster visueller Markierungen durchzuführen und deduplizierte Resultate als Bildkoordinaten und Identitäten aller visuellen Markierungen zu erhalten.

Bevorzugt ist die Rechen- und Kommunikationseinheit dazu angeordnet, die Bildkoordinaten mittels eines Prozesses zur Pose Estimation auf der Grundlage von zumindest intrinsischen Parametern der Kamerakalibrierung, der Bildkoordinaten der visuellen Markierung und einer realen Größe der visuellen Markierung als Eingabeparameter und einer vorbestimmten Koordinatentransformation in 3D-Absolutkoordinaten umzurechnen und einen Rotationsvektor und einen Translationsvektor in einem 3D-Koordinatensystem der Kameravorrichtung zu bestimmen, und den Rotationsvektor und den Translationsvektor mittels einer extrinsischen Kamera-Kalibrierung in Form einer Transformationsmatrix in ein Absolut-Koordinatensystem zu transformieren. Durch die Transformation in das Absolut-Koordinatensystem können Daten sinnvoll genutzt werden. Außerdem können dadurch mehrere Erfassungseinheiten für eine größere Fläche verwendet werden - in Bereichen, in denen sich deren Erfassungsgebiet überlagert geben beide Kameras dann die selbe Absolut-Position zurück.

Bevorzugt werden bei der Vorrichtung extrinsische Kalibrierungsparameter, die eine Rotation und die Position der Erfassungsvorrichtung im Raum beschreiben, mittels eines im Voraus erstellten 3D-Modells eines Zielbereichs mit in 2D und 3D jeweils korrespondierenden Punkten bestimmt werden. Vorteil der Nutzung eines Referenzmodells ist, dass die extrinsische Kalibrierung für den Benutzer dadurch wesentlich schneller und einfacher ist, da die relevanten Punkte direkt ausgewählt werden können. Außerdem kann die Kalibrierung visuell dargestellt und somit Fehler leicht gefunden werden.

Bevorzugt werden bei der Vorrichtung extrinsische Kalibrierungsparameter, die eine Rotation und die Position der Erfassungsvorrichtung im Raum beschreiben, und mittels eines im Voraus erstellten 3D-Modells eines Zielbereichs und eines Marker-Boards bestimmt werden. Ein solches Marker-Board beinhaltet mehrere Marker in einer definierten Anordnung. Hierbei muss der Nutzer nur noch die Position des Marker-Boards in Absolut-Koordinaten festlegen. Dadurch kann die Kalibrierung für den Nutzer sehr schnell erfolgen.

Darüber hinaus wird die Aufgabe auch gelöst durch ein Verfahren zur Ermittlung der Position von Objekten in einem definierten Bereich, mit den Schritten: Erfassen zumindest einer visuellen Markierung an einem zu lokalisierenden Objekt mit zumindest einer optischen Erfassungsvorrichtung, die an einer baulichen Struktur fest montiert ist, wobei die zumindest eine optische Erfassungsvorrichtung zumindest eine Kameravorrichtung und zumindest eine mit der Kameravorrichtung über eine schnelle drahtgebundene Verbindung direkt gekoppelte Rechen- und Kommunikationseinheit aufweist; Aufnehmen zumindest eines Bilds des definierten Bereichs mittels der Kameravorrichtung; Übertragen von Daten des aufgenommenen Bilds mittels der optischen Erfassungsvorrichtung mit einer ersten Datenmenge über die schnelle drahtgebundene Verbindung an die Rechen- und Kommunikationseinheit; und zunächst direktem Verarbeiten der Daten des aufgenommenen Bilds mittels der optischen Erfassungsvorrichtung und sodann Übertragen der verarbeiteten Daten mit einer zweiten Datenmenge, die kleiner ist als die erste Datenmenge, an eine externe Servervorrichtung.

### Kurze Beschreibung der Zeichnungen

Die Erfindung wird nachstehend anhand eines bevorzugten Ausführungsbeispiels unter Bezugnahme auf die Zeichnung näher beschrieben. Es zeigen:
Fig. 1 eine schematische Darstellung eines grundlegenden Aufbaus einer Vorrichtung zur Ermittlung der Position von Objekten in einem definierten Bereich gemäß einem Ausführungsbeispiel;
Fig. 2 eine schematische Darstellung einer Erfassungsvorrichtung in der Vorrichtung nach Fig. 1;
Fig. 3 eine schematische Darstellung zur Erklärung der Funktionsweise einer Rechen- und Kommunikationseinheit in der Erfassungsvorrichtung nach Fig. 2;
Fig. 4 ein Ablaufdiagramm zur Erklärung einer parallelisierten Verarbeitung eines aufgenommenen Bilds;
Fig. 5 eine schematische Darstellung zur Aufteilung eines Bilds in 4 Ausschnitte;
Fig. 6 eine schematische Darstellung zur Aufteilung des Bilds in 3 Ausschnitte; und
Fig. 7 ein Ablaufdiagramm zur Erklärung einer Bestimmung von Koordinaten in einem Zielsystem.

### Beschreibung von Ausführungsbeispielen

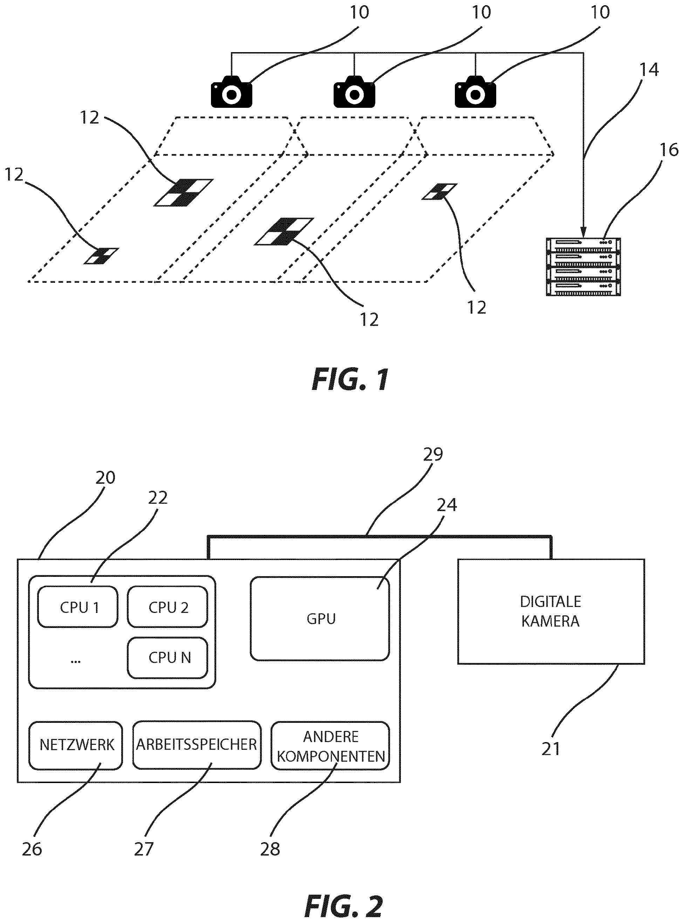

Fig. 1 zeigt eine schematische Darstellung eines grundlegenden Aufbaus einer Vorrichtung 100 zur Ermittlung der Position von Objekten in einem definierten Bereich gemäß einem Ausführungsbeispiel, und stellt ein grundlegendes Funktionsprinzip der Erfassung dar.

Gemäß Fig. 1 ist eine Vielzahl von Objekten in einem vorbestimmten Bereich zu erfassen, und ist dazu in einem vorbestimmten Bereich eine Vielzahl von optischen Erfassungsvorrichtungen 10, die beispielsweise zumindest eine hochauflösende, digitale Kamera 21 beinhalten, an vorbestimmten Positionen, beispielsweise an einer Deckenkonstruktion oder Säulen derselben, feststehend und in einer vorbestimmten Ausrichtung montiert.

Die einzelnen Objekte sind anhand visueller Markierungen (hier beispielsweise 4 Stück) auffindbar. Als visuelle Markierungen werden leicht maschinell sichtbare bzw. erkennbare Objekte, die nachstehend auch als Marker 12 bezeichnet werden, eingesetzt. Diese Marker 12 sind einerseits durch ihr Aussehen leicht auf einem digitalen Bild auffindbar, und enkodieren andererseits auch eine Identifikation oder Identität (ID). Dadurch ist jeder Marker 12 eindeutig identifizierbar. Beispiele für solche Marker sind AruCo-Marker, QR-Codes, und dergleichen. Das Verfahren und die Vorrichtung wie hierin beschrieben sind ist nicht von einer speziellen Art der Markierung abhängig. Es können auch mehrere Marker 12 an einem Zielobjekt angebracht werden, um eine Sichtbarkeit aus mehreren Richtungen zu verbessern. Auch eine Anordnung auf einer dreidimensionalen Form (beispielsweise einem Würfel) ist möglich.

Jede Erfassungsvorrichtung 10 erfasst alle visuellen Markierungen bzw. Marker 12 in einem für sie sichtbaren Bereich, bestimmt oder erfasst die absoluten Positionen der Marker 12 und sendet die Ergebnisse zur weiteren Verarbeitung und Nutzung über ein Netzwerk 14 an zumindest einen Server 16, beispielsweise einen entfernten Server 16, der von an sich bekannter Bauart und aus handelsüblicher Hardware aufgebaut sein kann.

Die an den Server 16 gesendeten Daten können beispielsweise für eine Analyse der Fahrwege, eine Live-Darstellung von Objekten in einem Modell des Zielbereichs oder auch für eine Navigation der Objekte verwendet werden. Es wird angemerkt, dass in dem vorliegenden Ausführungsbeispiel die Rechen- und Kommunikationseinheit 20 ohne Bildschirm betreibbar sein kann, der Server 16 aber über einen Bildschirm verfügen kann.

Die Vorrichtung 100, die insoweit ein Erfassungssystem ausbildet, besteht somit insoweit grundlegend aus zumindest einer Erfassungsvorrichtung 10, zumindest einer visuellen Markierung 12 und zumindest einem Server 16. Ferner kann die Vorrichtung 100 eine Benutzeroberfläche zur Kalibrierung aufweisen, die noch zu beschreiben ist.

Fig. 2 zeigt eine schematische Darstellung einer Erfassungsvorrichtung in der Vorrichtung. Jede Erfassungsvorrichtung (EV) 10 besteht gemäß dem vorliegenden Ausführungsbeispiel aus der hochauflösenden, digitalen Kamera 21 und einer Rechen- und Kommunikationseinheit (REK) 20.

Gemäß Fig. 2 beinhaltet die Rechen- und Kommunikationseinheit 20 einen Mehrkern-Prozessor (CPU 1 bis CPU N) 22 und einen Grafikprozessor (GPU) 24, eine Netzwerk-Schnittstelle 26 für beispielsweise ein lokales Netzwerk wie Ethernet oder WiFi, lokalen Speicher und/oder Arbeitsspeicher 27 sowie andere Komponenten 28, die üblicherweise in einer Rechen- und Kommunikationseinheit vorgesehen sein können, wie beispielsweise eine Eingabe/Ausgabe (I/O), einen Festspeicher wie beispielsweise ROM, einen Steckplatz für steckbare Speichermedien und dergleichen. In dem vorliegenden Ausführungsbeispiel kann die Rechen- und Kommunikationseinheit 20 ohne Bildschirm betrieben werden und ist für geringen Energieverbrauch optimiert.

Zur Erfassung der Marker 12 ist in der Kamera 21 ein optischer Sensor (nicht gezeigt) verbaut. Der optische Sensor ist ein hochauflösender, digitaler Sensor, dessen Auflösung in dem vorliegenden Ausführungsbeispiel wenigstens 1 Megapixel beträgt. Der optische Sensor kann darüber hinaus sowohl ein Farbsensor als auch ein monochromer Sensor sein.

Dieser Sensor ist zusammen mit einem an sich bekannten Signalverarbeitungs- und Steuerungschip zu einer Kameravorrichtung wie beispielsweise der digitalen Kamera 21 verbaut und über eine Datenübertragungsschnittstelle 29, die beispielsweise eine Kabelverbindung wie beispielsweise eine USB-Verbindung oder eine serielle Schnittstelle sein kann, mit der Rechen- und Kommunikationseinheit 20 verbunden.

Über die kurze und schnelle Verbindung der Datenübertragungsschnittstelle 29 werden Bilddaten von der Kamera 21 an die Rechen- und Kommunikationseinheit 20 gesendet, und gleichzeitig auch die Kamera 21 mit Strom versorgt. Prinzipiell können dabei auch mehrere Kameras 21 mit einer Rechen- und Kommunikationseinheit 20 verbunden sein. Dies würde lediglich die Verarbeitung verlangsamen. Entscheidend ist, dass keine (vollständigen) Bilder bzw. umfangreichen Bilddaten über ein Netzwerk mit beschränkter Übertragungsgeschwindigkeit gesendet werden müssen, denn die Erfassungsvorrichtung 10 nimmt zunächst Bilder auf und verarbeitet diese sodann direkt.

Die Erfassungsvorrichtung 20 kann beispielsweise aus Komponenten wie einer Pi Camera v2.1 mit 8MP Sony IMX219PQ Exmor R CMOS-Bildsensor als Kamera 21 und einem Raspberry PI 3B mit 1.2 GHz Quad Core ARM cortex-a53 und LAN/WLAN als Rechen- und Kommunikationseinheit 20 bestehen.

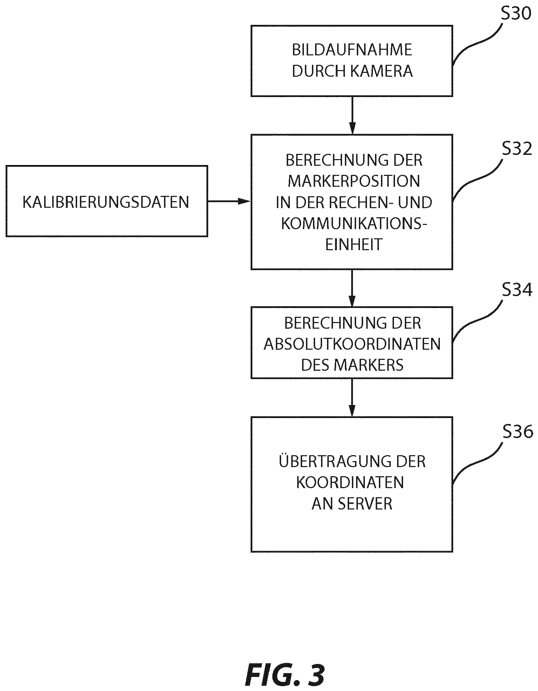

Fig. 3 zeigt ein Ablaufdiagramm zur Erklärung der grundlegenden Funktionsweise einer Rechen- und Kommunikationseinheit 20 in der Erfassungsvorrichtung 10.

In einem Schritt S30 wird zur Lokalisierung von Zielobjekten anhand der visuellen Marker 12 zunächst ein optisches Bild aufgenommen und an die Rechen- und Kommunikationseinheit 20 übertragen. Mithilfe zusätzlicher Kalibrierungsdaten, die der Rechen- und Kommunikationseinheit 20 zugeführt werden, berechnet sodann in einem Schritt S32 die Rechen- und Kommunikationseinheit 20 zunächst die Positionen der Marker 12 in dem aufgenommenen optischen Bild. Anschließend rechnet die Rechen- und Kommunikationseinheit 20 in einem Schritt S34 diese Positionen in absolute Koordinaten der Marker 12 (und damit des Objekts) um. In einem Schritt S36 werden diese Koordinaten dann von der Rechen- und Kommunikationseinheit 20 an den Server 16 übertragen.

Zur Erkennung in Echtzeit (als Kriterium für eine Echtzeiterkennung wird in diesem Ausführungsbeispiel eine Latenzzeit von weniger als 0,1 Sekunden als hinreichend erachtet) muss das von der Kamera 21 aufgenommene Bild möglichst schnell verarbeitet werden. Dazu wird in dem vorliegenden Ausführungsbeispiel die Verarbeitung auf mehrere Prozessoren übertragen und dadurch parallelisiert. Hierbei kann der Grafikprozessor 24 und/oder die Mehrkern-CPU 22 verwendet werden.

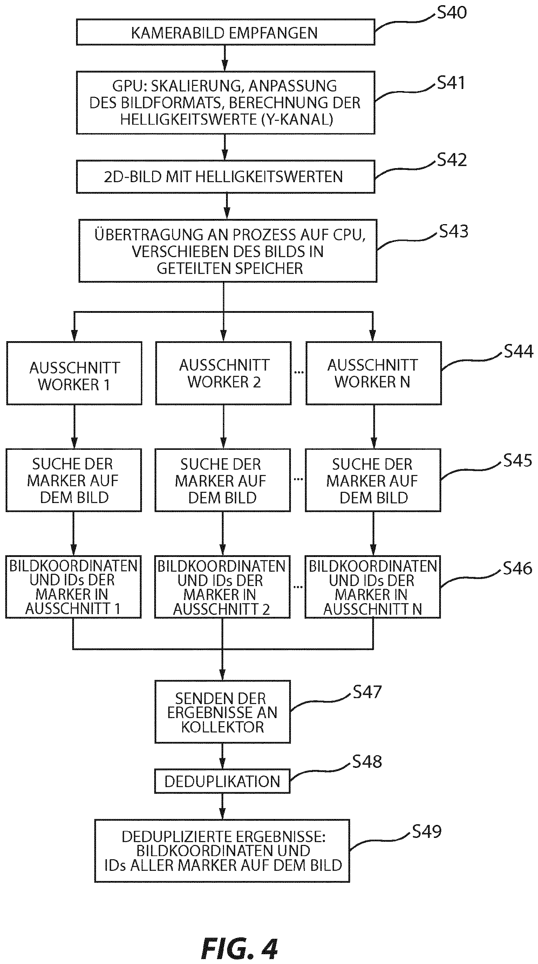

Fig. 4 zeigt ein Ablaufdiagramm zur Erklärung der parallelisierten Verarbeitung eines aufgenommenen Bilds.

In einem Schritt S40 wird zunächst das Bild des Sensors von der Rechen- und Kommunikationseinheit 20 empfangen. Falls ein Farbsensor verwendet wird, wird sodann in einem Schritt S41 zur Effizienzseigerung das Farbbild in ein Schwarzweißbild (Y-Kanal im YUV-Format) umgewandelt. Falls kein Farbsensor verwendet wird, kann dieser Teilschritt optional sein. Zusätzlich wird das Bild in eine passende Auflösung skaliert. In einem darauffolgenden Schritt S42 wird ein resultierendes 2D-Bild mit Helligkeitswerten erhalten. Sodann wird in einem nächsten Schritt S43 das gegebenenfalls farbumgewandelte und skalierte Bild an zumindest einen Prozess auf zumindest einer CPU übertragen und in einen gemeinsamen (geteilten) Speicherbereich, d.h. einen sogenannten Shared Memory, der Rechen- und Kommunikationseinheit 20 gelegt bzw. verschoben.

In einem nächsten Schritt S44 wird das in den gemeinsamen Speicherbereich gelegte Bild sodann von mehreren Prozessen (die nachstehend auch als Worker bezeichnet werden) parallel bearbeitet. Hierbei ist jeder Worker für einen Teilausschnitt des Bildes zuständig. Die Aufteilung des Bilds in mehrere Teilausschnitte wird nachstehend genauer beschrieben.

In einem nachfolgenden Schritt S45 sucht jeder Worker nun nach den visuellen Markierungen. Hierfür kann beispielsweise der frei verfügbare OpenCV ArUCo Localization-Algorithmus verwendet werden (*cv::aruco::detectMarkers*). Alternativ können auch andere Bibliotheken, wie z. B. ArUCo verwendet werden. Die Rückgabewerte dieses Algorithmus sind dann in einem Schritt S46 die Ecken der Marker in (x, y)-Pixelkoordinaten auf dem Bild und die IDs der gefundenen Marker.

Die von allen Workern erhaltenen Ergebnisse werden in einem Schritt S47 in einem Kollektorprozess gesammelt. Da in den vorangehenden Schritten mehrere Worker denselben Marker 12 auffinden können, wird in Schritt S48 schließlich eine Deduplikation durchgeführt. Auf die Deduplikation wird nachstehend genauer Bezug genommen. In Schritt S49 werden sodann die deduplizierten Ergebnisse als Bildkoordinaten und IDs aller Marker 12 auf dem aufgenommenen Bild erhalten.

Wie vorstehend beschrieben wurde, wird das Bild parallelisiert verarbeitet, um eine geringe Systemlatenzzeit von weniger als 0,1 Sekunden zu erreichen. Zur parallelen Verarbeitung wird das Bild in N Ausschnitte aufgeteilt. Hierbei ist zu beachten, dass Marker 12 von einem Worker nur erkannt werden können, wenn sie in einem Bildausschnitt bzw. für diesen vollständig sichtbar sind.

Durch das Aufteilen in Bildausschnitte kann ein Marker 12 in zwei oder mehr Teile aufgeteilt werden. Allerdings muss ein Marker 12 in zumindest einem Bildausschnitt vollständig sichtbar sein, da dieser sonst nicht mehr erkannt wird. Dies wird durch eine Überlappung von Bildausschnitten, die der Seitenlänge eines Markers in Pixeln entspricht, in der in der jeweiligen Anwendung nächstmöglichsten Position des Markers 12 zur Kamera 21 gewährleistet.

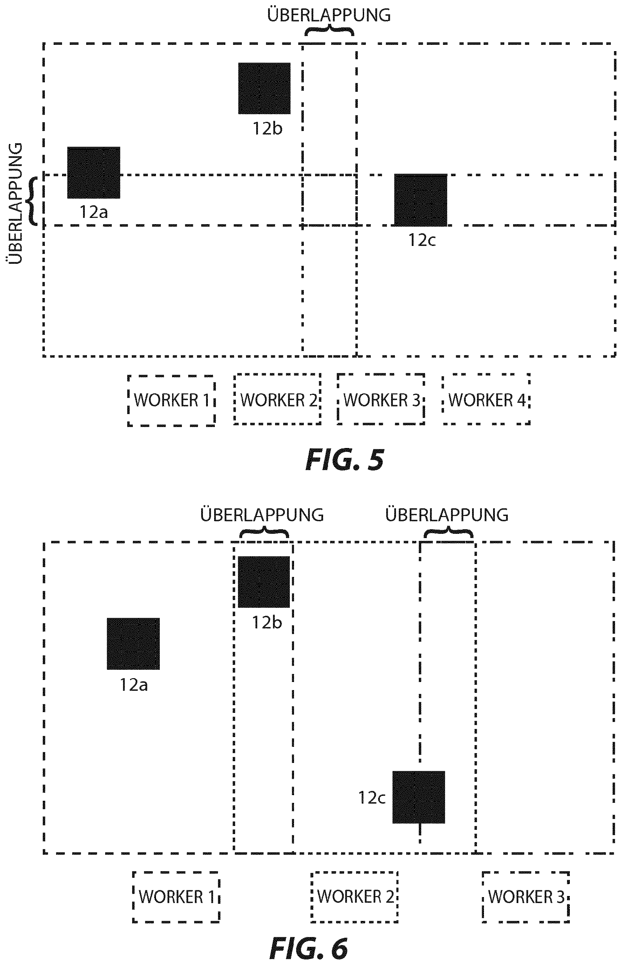

Die Figuren 5 und 6 zeigen jeweils eine schematische Darstellung zur Aufteilung eines Bilds in 4 Ausschnitte (Fig. 5) und eine schematische Darstellung zur Aufteilung des Bilds in 3 Ausschnitte (Fig. 6), als zwei mögliche Aufteilungen des Bildes in N=3 und N=4 Ausschnitte.

Zusätzlich können auch die Positionen der Marker im zuletzt analysierten Bild herangezogen werden, um Teilausschnitte hinzuzufügen. So ist in manchen Anwendungsfällen zu erwarten, dass die Position eines Objektes zwischen zwei aufeinanderfolgenden Bildern sich nicht stark verändert. Daher kann ein Ausschnitt um die letzte Position des Markers als Teilausschnitt hinzugefügt und bearbeitet werden. Dadurch kann auf eine Analyse von Bildbereichen ohne Marker verzichtet werden. Die weitere Analyse dieser Teilausschnitte gestaltet sich genau wie in den anderen Fällen.

Eine Überlappung gemäß dem vorliegenden Ausführungsbeispiel wird beispielsweise durch einen Marker 12a in Fig. 5 verdeutlicht. Wie aus Fig. 5 ersichtlich, ist dieser Marker 12a zwar von einem Worker 1 zu erkennen, nicht aber von einem Worker 2, da dieser nur einen Teil der visuellen Markierung sehen kann. Ein Marker 12b ist nur von einem Worker 1 zu erkennen, und ein Marker 12c ist von sowohl einem Worker 3 als auch von einem Worker 4 zu erkennen.

In vergleichbarer Weise ist aus Fig. 6 ersichtlich, dass der Marker 12a nur von dem Worker 1 zu erkennen ist, der Marker 12b von sowohl dem Worker 1 als auch dem Worker 2 zu erkennen ist, und der Marker 12c nur für den Worker 2, nicht aber für den Worker 3 zu erkennen ist.

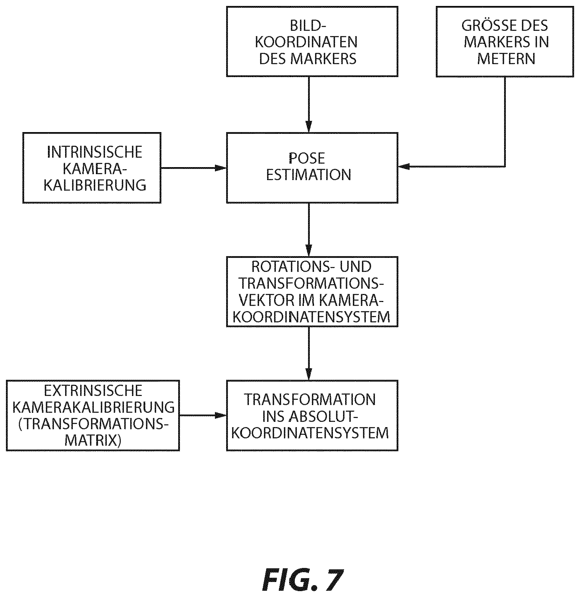

Fig. 7 zeigt im weiteren Verarbeitungsablauf ein Ablaufdiagramm zur Erklärung einer Bestimmung von Koordinaten in einem Zielsystem. Genauer stellt Fig. 7 schematisch eine Umrechnung der in Schritt S49 von Fig. 4 erhaltenen Bildkoordinaten in 3D-Absolut-Koordinaten umgerechnet dar. Der Prozess ist dabei grundlegend in zwei Teile aufgeteilt: In eine sogenannte (3D-) Pose Estimation und in eine Koordinatentransformation.

Die Pose Estimation betrifft allgemein das Problem des Bestimmens der Transformation eines Objekts in einem 2D-Bild, welche das 3D-Objekt ergibt. Die Notwendigkeit der Pose Estimation resultiert aus Beschränkungen einer merkmalsbasierten Pose Estimation in Umgebungen, in welchen es schwierig ist, Ecken oder Kanten aus einem Bild zu extrahieren. Um derartige Probleme zu umgehen, wird bei der Pose Estimation ein Objekt durch Verwendung von Freiformkonturen als Ganzes behandelt.

Die Pose Estimation benötigt zumindest folgende Eingabeparameter: Die intrinsischen Parameter der Kamerakalibrierung, die Bildkoordinaten des Markers 12 und die reale Größe des angebrachten Markers 12. Aus diesen Parametern werden sodann ein Rotations- und ein Translationsvektor im 3D-Koordinatensystem der Kamera 21 bestimmt. Die Pose Estimation ist beispielsweise in der OpenCV Bibliothek als *cv::aruco::estimatePoseSingleMarkers* frei verfügbar, so dass eine weitergehende Beschreibung hierin entfallen kann.

Anschließend werden nun diese Vektoren aus dem Kamera-Koordinatensystem in das Absolut-Koordinatensystem transformiert. Hierfür ist die extrinsische Kamera-Kalibrierung in Form einer Transformationsmatrix notwendig, die nachstehend genauer beschrieben wird. Mithilfe von Verfahren aus der linearen Algebra (Koordinatentransformation) können nun die Rotations-und Translationsvektoren in das Absolut-Koordinatensystem transformiert werden. Die transformierten Vektoren beschreiben dann die Position (Translationsvektor) und Rotation des visuellen Markers 12 (und damit auch des Objekts) im Zielbereich in Absolut-Koordinaten.

Die vorstehend beschriebenen Schritte können sowohl unmittelbar auf der Erfassungsvorrichtung 10 als auch zu einem späteren Zeitpunkt auf dem zentralen Server 16 durchgeführt werden. Im letztgenannten Fall sendet die Erfassungsvorrichtung 10 die 2D-Bildkoordinaten der Marker 12 an den Server 16.

Das Kamerabild kann darüber hinaus dazu verwendet werden, weitere Informationen zu einem erfassten Objekt oder zu einem Erfassungsbereich zu gewinnen (beispielsweise Information betreffend einen Beladungszustand, einen Typ eines Fahrzeuges, Personen im Umfeld).

Dazu werden relevante Bildausschnitte von der Rechen- und Kommunikationseinheit 20 an den leistungsfähigeren Server 16 gesendet. Zuvor wird der Server 16 mit einigen Bildern auf eine vorliegende Problemstellung angelernt. Danach kann der Server 16 die zu gewinnenden (gewünschten) Informationen erkennen.

Nachstehend wird die Benutzeroberfläche zur Kalibrierung und die für die vorstehend beschriebenen Berechnungen notwendigen intrinsischen und extrinsischen Parameter der Kamera 21 näher erläutert.

Zum Auffinden der intrinsischen Kalibrierungsparameter der Kamera 21 werden bekannte Verfahren wie z. B. solche basierend auf ChAruCo Markern verwendet. Auf diese Weise können die intrinsischen Parameter der Kamera 21 errechnet werden, die die Verzerrung des Bildes beschreiben. Die zugrundeliegenden Verfahren sind an sich gut bekannt und werden daher hierin nicht weiter beschrieben.

Die extrinsischen Kalibrierungsparameter der Kamera 21 beschreiben die Rotation und die Position der Erfassungsvorrichtung 20 im Raum. Um diese zu bestimmen, wird ein 3D-Modell des Zielbereichs verwendet, welches im Voraus interaktiv erstellt werden kann. Sodann sind in 2D und 3D korrespondierende Punkte erforderlich.

Um diese korrespondierenden Punkte zu erstellen kann a) eine Kalibrierung per "Punkt-Matching-Verfahren" bzw. Punktübereinstimmungsverfahren und/oder b) eine Positionierung eines Marker-Boards durchgeführt werden.

Für die Kalibrierung per Punkt-Matching-Verfahren nach vorstehend a) wird einem Nutzer ein 3D-Modell des Zielbereichs neben dem Kamerabild angezeigt. Auf dieser Grundlage kann der Nutzer Punkte im 3D-Modell des Zielbereichs und die jeweils korrespondierenden Punkte im Kamerabild markieren, beispielsweise unter Verwendung eines Regals oder einer Box, dessen bzw. deren sämtliche Ecken sowohl im 2D-Bild als auch am 3D-Modell markiert werden. Dadurch kann eine Liste an Punkt-Korrespondenzen erhalten werden.

Für die Positionierung eines Marker-Boards nach vorstehend b) wird ein im Voraus definiertes Marker-Board verwendet. Ein solches Marker-Board beinhaltet mehrere Marker 12 in einer definierten Anordnung, sodass von jedem Marker 12 beispielsweise die Position relativ zu einer linken oberen Ecke des Marker-Boards bekannt ist. Werden nun die Marker 12 von der Kamera 21 mit den vorstehend beschriebenen Verfahren und/oder Vorgehensweisen lokalisiert, braucht der Nutzer nur noch die Position der linken oberen Ecke des Markers im 3D-Modell zu spezifizieren. Es wird angemerkt, dass gleichwirkend jeder andere Punkt auf dem Marker-Board verwendet werden kann. Auf diese Weise können die erforderlichen 2D-3D Korrespondenzen automatisiert generiert werden.

Die auf vorstehender Grundlage gewonnenen Punkte ergeben eine Instanz des sogenannten "Perspective-n-Point"-Problems. Das Perspective-n-Point-Problem ist das Problem des Abschätzens einer Pose bzw. Stellung einer kalibrierten Kamera 21 mit einem gegebenen Satz von n realen (bzw. Modell-) 3D-Punkten und deren entsprechenden 2D-Projektionen in einem Bild. Die Kamerapose besteht beispielsweise aus 6 Freiheitsgraden, welche sich aus der Rotation (Wanken, Neigen und Gieren) und der 3D-Translation der Kamera 21 in Bezug auf die Welt zusammensetzen.

Das Perspective-n-Point-Problem wird mit einem sogenannten Solver gelöst. Hierfür kann zum Beispiel der frei verfügbare solvePnP aus OpenCV verwendet werden. Als Ergebnis wird eine Transformationsmatrix erhalten, die den extrinsischen Kalibrierungsparametern entspricht.

Wie vorstehend beschrieben wurde, beinhaltet eine Vorrichtung zur Ermittlung der Position von Objekten in einem definierten Bereich zumindest eine optische Erfassungsvorrichtung, die an einer baulichen Struktur fest montiert und dazu angeordnet ist, zumindest eine visuelle Markierung an einem zu lokalisierenden Objekt zu erfassen. Die die zumindest eine optische Erfassungsvorrichtung weist zumindest eine Kameravorrichtung und zumindest eine mit der Kameravorrichtung über eine schnelle drahtgebundene Verbindung direkt gekoppelte Rechen- und Kommunikationseinheit auf. Die die Kameravorrichtung ist dazu angeordnet, zumindest ein Bild des definierten Bereichs aufzunehmen. Die optische Erfassungsvorrichtung ist dazu angeordnet, Daten des aufgenommenen Bilds mit einer ersten Datenmenge über die schnelle drahtgebundene Verbindung an die Rechen- und Kommunikationseinheit zu übertragen. Die Rechen- und Kommunikationseinheit ist dazu angeordnet, die Daten des aufgenommenen Bilds zunächst direkt zu verarbeiten und verarbeitete Daten mit einer zweiten Datenmenge, die kleiner ist als die erste Datenmenge, an eine externe Servervorrichtung zu übertragen. Ein Verfahren zur Ermittlung der Position von Objekten in einem definierten Bereich führt korrespondierende Verfahrensschritte aus.

In manchen Ausführungsbeispielen umfasst die Erfassungsvorrichtung 10/die Rechen- und Kommunikationseinheit 20 zumindest einen Prozessor oder zentrale Verarbeitungseinheit. Der Prozessor kann dazu konfiguriert sein, verschiedene Programmcodes auszuführen. Die implementierten Programmcodes können zum Beispiel Routinen zur Markierungserfassung, Bildverarbeitung, Bildskalierung, Bildtransformation, Bildaufteilung, Berechnung von Helligkeitswerten, Deduplizierung, Koordinatentransformation, für maschinelles Lernen, Bestimmung intrinsischer und/oder extrinsischer Parameter und dergleichen wie vorstehend beschrieben umfassen.

In manchen Ausführungsbeispielen umfasst die Erfassungsvorrichtung 10/die Rechen- und Kommunikationseinheit 20 einen Speicher. In manchen Ausführungsbeispielen ist der zumindest eine Prozessor an den Speicher gekoppelt. Der Speicher kann eine beliebige geeignete Speichereinrichtung sein. In manchen Ausführungsbeispielen umfasst der Speicher einen Programmcodeabschnitt zum Speichern von Programmcodes, die an dem Prozessor implementierbar sind. Ferner kann in manchen Ausführungsbeispielen der Speicher weiter einen Datenspeicherabschnitt zum Speichern von Daten, wie beispielsweise Daten, die in Übereinstimmung mit den hierin beschriebenen Ausführungsbeispielen verarbeitet worden sind oder zu verarbeiten sind, beinhalten. Der innerhalb des Programmcodeabschnitts gespeicherte implementierte Programmcode und die innerhalb des Datenspeicherabschnitts gespeicherten Daten können durch den Prozessor über die Speicher-Prozessor-Kopplung bedarfsweise abgerufen werden.

In manchen Ausführungsbeispielen kann eine Benutzerschnittstelle beinhaltet sein. Die Benutzerschnittstelle kann in manchen Ausführungsbeispielen an den Prozessor gekoppelt sein. In manchen Ausführungsbeispielen kann der Prozessor den Betriebsablauf der Benutzerschnittstelle steuern und Eingaben von der Benutzerschnittstelle empfangen. In manchen Ausführungsbeispielen kann die Benutzerschnittstelle einen Benutzer dazu befähigen, der Erfassungsvorrichtung 10/der Rechen- und Kommunikationseinheit 20 Befehle zuzuführen, zum Beispiel über eine Tastatur oder eine berührungsempfindliche Eingabefläche. In manchen Ausführungsbeispielen kann die Benutzerschnittstelle den Benutzer dazu befähigen, Information von der Erfassungsvorrichtung 10/der Rechen- und Kommunikationseinheit 20 zu erhalten. Zum Beispiel kann die Benutzerschnittstelle eine Anzeige umfassen, die dazu konfiguriert ist, dem Benutzer Information von der Erfassungsvorrichtung 10/der Rechen- und Kommunikationseinheit 20 anzuzeigen.

In manchen Ausführungsbeispielen umfasst die Erfassungsvorrichtung 10/die Rechen- und Kommunikationseinheit 20 einen Sender/Empfänger. Der Sender/Empfänger in solchen Ausführungsbeispielen kann an den Prozessor gekoppelt sein und dazu konfiguriert sein, über ein bekanntes geeignetes Kommunikationsprotokoll mit einer anderen Vorrichtung oder elektronischen Geräten zu kommunizieren, beispielsweise über ein kabelgebundenes und/oder drahtloses Kommunikationsnetzwerk.

Allgemein können die verschiedenen Ausführungsbeispiele der Erfindung in Hardware oder Spezialschaltkreisen, Software, Logik oder einer Kombination derselben implementiert sein. Zum Beispiel können manche Aspekte in Hardware implementiert sein, während andere Aspekte in Firmware oder Software, welche von einer Steuereinrichtung, einem Mikroprozessor oder einer anderweitigen Rechenvorrichtung ausgeführt werden kann, obwohl die Erfindung nicht hierauf beschränkt ist. Während verschiedene Aspekte der Erfindung als Blockdiagramme, Ablaufdiagramme oder unter Verwendung einer anderen Piktogrammdarstellung dargestellt und beschrieben sein können, versteht sich, dass diese Blockdiagramme, Ablaufdiagramme, Systeme, Techniken oder Verfahren, die hierin beschrieben wurden, als nicht beschränkende Beispiele in Hardware, Software, Firmware, Spezialschaltkreisen oder Logik, Steuereinrichtungen, anderweitigen Recheneinrichtungen oder einer geeigneten Kombination derselben implementiert sein können.

Der Speicher kann von einer beliebigen Art sein, die für die lokale technische Umgebung geeignet ist, und kann unter Verwendung jeder geeigneten Datenspeichertechnologie implementiert sein. Dazu zählen beispielsweise Halbleiter-basierte Speichereinrichtungen, magnetische Speichereinrichtungen, optische Speichereinrichtungen, verbaute Speicher und entfernbare Speicher. Die Datenprozessoren können von einer beliebigen Art sein, die für die lokale technische Umgebung geeignet ist, und können, als nicht beschränkende Beispiele, einen oder mehrere Computer, Spezialrechner, Mikroprozessoren, digitale Signalprozessoren (DSPs), anwendungsspezifische integrierte Schaltkreise (ASICs), Torschaltkreise und Prozessoren basierend auf Mehrkern-Prozessorarchitekturen beinhalten.

Die vorstehende Beschreibung stellt anhand beispielhafter und nicht beschränkender Beispiele eine vollständige und aussagekräftige Beschreibung des beispielhaften Ausführungsbeispiels der Erfindung bereit. Für den Fachmann können sich ausgehend von der vorangehenden Beschreibung in Verbindung mit den beigefügten Zeichnungen und den angefügten Ansprüchen jedoch verschiedenartige Modifikationen und Anpassungen ergeben. Es versteht sich, dass alle derartigen und gleichartigen Modifikationen der erfindungsgemäßen Lehre in den Rahmen der Erfindung wie durch die angefügten Ansprüche definiert fallen.

## Patentansprüche

1. Vorrichtung zur Ermittlung der Position von Objekten in einem definierten Bereich, mit
zumindest einer optischen Erfassungsvorrichtung, die an einer baulichen Struktur fest montiert und dazu angeordnet ist, zumindest eine visuelle Markierung an einem zu lokalisierenden Objekt zu erfassen, wobei
die zumindest eine optische Erfassungsvorrichtung zumindest eine Kameravorrichtung und zumindest eine mit der Kameravorrichtung über eine schnelle drahtgebundene Verbindung direkt gekoppelte Rechen- und Kommunikationseinheit aufweist; und
die Kameravorrichtung dazu angeordnet ist, zumindest ein Bild des definierten Bereichs aufzunehmen, die optische Erfassungsvorrichtung dazu angeordnet ist, Daten des aufgenommenen Bilds mit einer ersten Datenmenge über die schnelle drahtgebundene Verbindung an die Rechen- und Kommunikationseinheit zu übertragen, und die Rechen- und Kommunikationseinheit dazu angeordnet ist, die Daten des aufgenommenen Bilds zunächst direkt zu verarbeiten und verarbeitete Daten mit einer zweiten Datenmenge, die wesentlich kleiner ist als die erste Datenmenge, an eine externe Servervorrichtung zu übertragen.

2. Vorrichtung nach Anspruch 1, bei der die Erfassungsvorrichtung dazu angeordnet ist, mittels der Kameravorrichtung eine Mehrzahl von visuellen Markierungen in einem für sie sichtbaren Bereich zu erfassen und mittels der Rechen- und Kommunikationseinheit deren absolute Positionen zu berechnen.

3. Vorrichtung nach Anspruch 1 oder 2, die dazu angeordnet ist, für die Ermittlung der Position von Objekten in Echtzeit Latenzzeiten von weniger als 0,1 Sekunden aufzuweisen, und sowohl die Position als auch eine Orientierung von Objekten in drei Dimensionen zu bestimmen.

4. Vorrichtung nach einem der vorangehenden Ansprüche, bei der die Rechenund Kommunikationseinheit zumindest einen Grafikprozessor und/oder zumindest eine Mehrkern-CPU zur parallelisierten Echtzeitverarbeitung auf mehreren Prozessoren aufweist.

5. Vorrichtung nach einem der vorangehenden Ansprüche, bei der zur Erfassung der visuellen Markierungen in der Kameravorrichtung ein optischer Sensor angeordnet ist, wobei der optische Sensor ein mit wenigstens 1 Megapixel auflösender, digitaler Farbsensor oder ein monochromer Sensor ist.

6. Vorrichtung nach einem der vorangehenden Ansprüche, bei der die Rechenund Kommunikationseinheit dazu angeordnet ist, Kalibrierungsdaten zu empfangen, Positionen visueller Markierungen in dem aufgenommenen Bild zu berechnen und die berechneten Positionen in absolute Koordinaten der visuellen Markierungen umzurechnen.

7. Vorrichtung nach einem der vorangehenden Ansprüche, bei der die Rechenund Kommunikationseinheit dazu angeordnet ist, das Bild des Sensors zu empfangen, das Bild in eine passende Auflösung zu skalieren, ein 2D-Bild mit Helligkeitswerten zu erzeugen und das erzeugte 2D-Bild an zumindest einen Prozess auf zumindest einer CPU zu übertragen und in einen gemeinsamen Speicherbereich der Rechen- und Kommunikationseinheit zu verschieben.

8. Vorrichtung nach Anspruch 7, bei der die Rechen- und Kommunikationseinheit dazu angeordnet ist, das in den gemeinsamen Speicherbereich verschobene 2D-Bild in eine Mehrzahl von N Teilausschnitten (N ≥ 2) aufzuteilen, jedem Teilausschnitt einen dedizierten Prozess zuzuweisen und die Teilausschnitte mittels der zugewiesenen Prozesse parallel zu bearbeiten.

9. Vorrichtung nach Anspruch 8, bei der die Rechen- und Kommunikationseinheit dazu angeordnet ist, von den zugewiesenen Prozessen erhaltene Ergebnisse mittels eines Kollektorprozesses zu sammeln, eine Deduplikation mehrfach erfasster visueller Markierungen durchzuführen und deduplizierte Resultate als Bildkoordinaten und Identitäten aller visuellen Markierungen zu erhalten.

10. Vorrichtung nach Anspruch 9, bei der die Rechen- und Kommunikationseinheit dazu angeordnet ist, die Bildkoordinaten mittels eines Prozesses zur Pose Estimation auf der Grundlage von zumindest intrinsischen Parametern der Kamerakalibrierung, der Bildkoordinaten der visuellen Markierung und einer realen Größe der visuellen Markierung als Eingabeparameter und einer vorbestimmten Koordinatentransformation in 3D-Absolutkoordinaten umzurechnen und einen Rotationsvektor und einen Translationsvektor in einem 3D-Koordinatensystem der Kameravorrichtung zu bestimmen, und den Rotationsvektor und den Translationsvektor mittels einer extrinsischen Kamera-Kalibrierung in Form einer Transformationsmatrix in ein Absolut-Koordinatensystem zu transformieren.

11. Vorrichtung nach Anspruch 10, bei der extrinsische Kalibrierungsparameter, die eine Rotation und die Position der Erfassungsvorrichtung im Raum beschreiben, mittels eines im Voraus erstellten 3D-Modells eines Zielbereichs mit in 2D und 3D jeweils korrespondierenden Punkten bestimmt werden.

12. Vorrichtung nach Anspruch 10, bei der extrinsische Kalibrierungsparameter, die eine Rotation und die Position der Erfassungsvorrichtung im Raum beschreiben, mittels eines im Voraus erstellten 3D-Modells eines Zielbereichs und eines Marker-Boards bestimmt werden.

13. Verfahren zur Ermittlung der Position von Objekten in einem definierten Bereich, mit den Schritten:
Erfassen zumindest einer visuellen Markierung an einem zu lokalisierenden Objekt mit zumindest einer optischen Erfassungsvorrichtung, die an einer baulichen Struktur fest montiert ist, wobei die zumindest eine optische Erfassungsvorrichtung zumindest eine Kameravorrichtung und zumindest eine mit der Kameravorrichtung über eine schnelle drahtgebundene Verbindung direkt gekoppelte Rechen- und Kommunikationseinheit aufweist;
Aufnehmen zumindest eines Bilds des definierten Bereichs mittels der Kameravorrichtung;
Übertragen von Daten des aufgenommenen Bilds mittels der optischen Erfassungsvorrichtung mit einer ersten Datenmenge über die schnelle drahtgebundene Verbindung an die Rechen- und Kommunikationseinheit; und
zunächst direktem Verarbeiten der Daten des aufgenommenen Bilds mittels der optischen Erfassungsvorrichtung und sodann Übertragen der verarbeiteten Daten mit einer zweiten Datenmenge, die kleiner ist als die erste Datenmenge, an eine externe Servervorrichtung.
